# EUROPEAN PATENT APPLICATION

(11) **EP 2 518 662 A1**
(43) Date of publication of application: **31.10.2012**
(21) Application number: 11185580.5
(22) Date of filing: 18.10.2011
(51) Int. Cl.: G06K 9/00

(54) **Electronic apparatus and video processing method**

(30) Priority: 27.04.2011 JP 2011100188
(71) Applicant: Kabushiki Kaisha Toshiba, Tokyo 105-8001 (JP)
(72) Inventor: Nishimura, Hayato, Tokyo, 105-8001 (JP)
(74) Representative: HOFFMANN EITLE

(57) **Abstract**

According to one embodiment, an electronic apparatus includes: an image-capturing module; a detector which detects a certain object from video captured by the image-capturing module; a function execution module which executes a certain function based on a detection result of the detector; and a video processor which executes video processing on the video on which a detection process is executed by the detector so that the detector easily detects the certain object to be a detection target.

## Description

### FIELD

Embodiments described herein relate generally to an electronic apparatus and a video processing method.

### BACKGROUND

With the advance of technology, there has been recently proposed an electronic apparatus including an image-capturing module such as a digital television including a camera. In such an electronic apparatus, various kinds of functions may be executed based on a user's face which is detected or recognized from an image captured by the image-capturing module.

### BRIEF DESCRIPTION OF THE DRAWINGS

Fig. 1 is a conceptual view showing an example of a digital television (DTV) in an embodiment.
Fig. 2 is a block diagram showing an example of internal structure of the DTV.
Fig. 3 is a block diagram showing an example of configuration concerned with a face detection/recognition function in the DTV.
Figs. 4A to 4D are graphs for explaining video processing executed on video as a subject of a face detection/recognition process by a video processor according to the embodiment.
Fig. 5 is a conceptual view showing an example of an adjustment screen according to the embodiment.
Fig. 6 is a flow chart showing an example of processing concerned with face detection/recognition according to the embodiment.

### DETAILED DESCRIPTION OF THE EMBODIMENTS

In general, according to one exemplary embodiment, an electronic apparatus includes: an image-capturing module; a detector which detects a certain object from video captured by the image-capturing module; a function execution module which executes a certain function based on a detection result of the detector; and a video processor which executes video processing on the video on which a detection process is executed by the detector so that the detector easily detects the certain object to be a detection target.

An embodiment of the invention will be described below with reference the drawings by way of example.

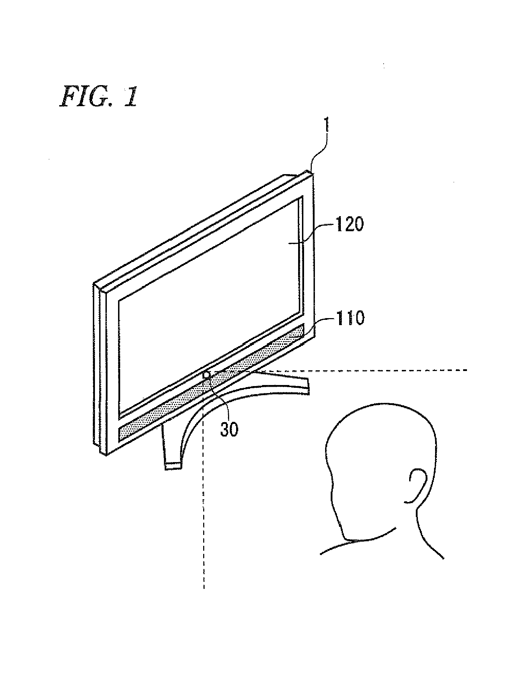

Fig. 1 is a conceptual view showing an example of a DTV 1 according to the embodiment.

For example, the DTV 1 is a digital television which is an example of an electronic apparatus in the embodiment. Although the DTV 1 is taken as an example of an electronic apparatus in the embodiment, the embodiment is not limited thereto. For example, various devices such as a digital versatile disc (DVD) player, a hard disk drive (HDD) player, a set top box (STB), a personal computer (PC), etc. may be conceived as examples of the electronic apparatus.

For example, the DTV 1 can decode a broadcast signal received from broadcast wave or the like to output the decoded broadcast signal as video and audio from a display module 120 and speakers 110.

The DTV 1 has an image-capturing module 30 which serves as an image-capturing means which can capture an image in front of the DTV 1. That is, it is possible to capture an image of a user's face right in front of the DTV 1.

The internal structure of the DTV 1 will be described below in detail.

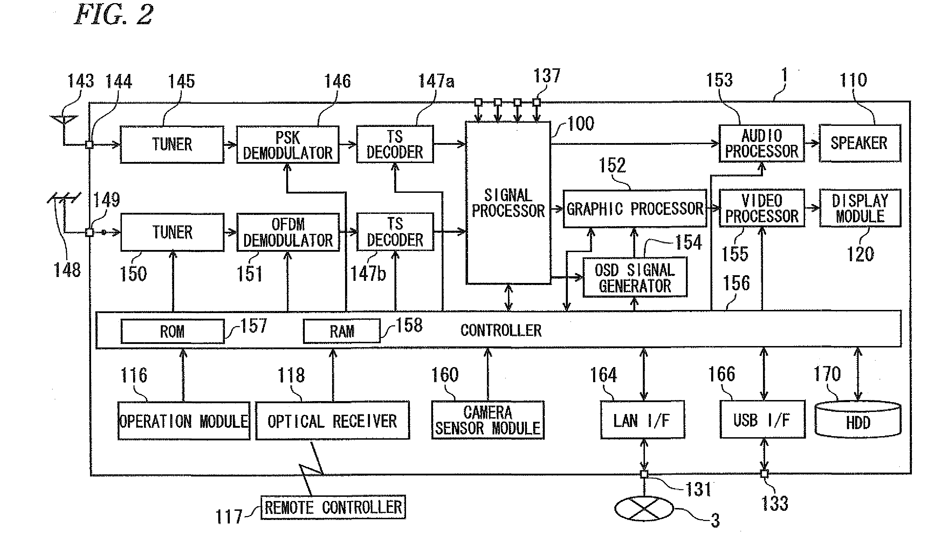

Fig. 2 is a block diagram showing an example of the internal structure of the DTV 1 according to the embodiment.

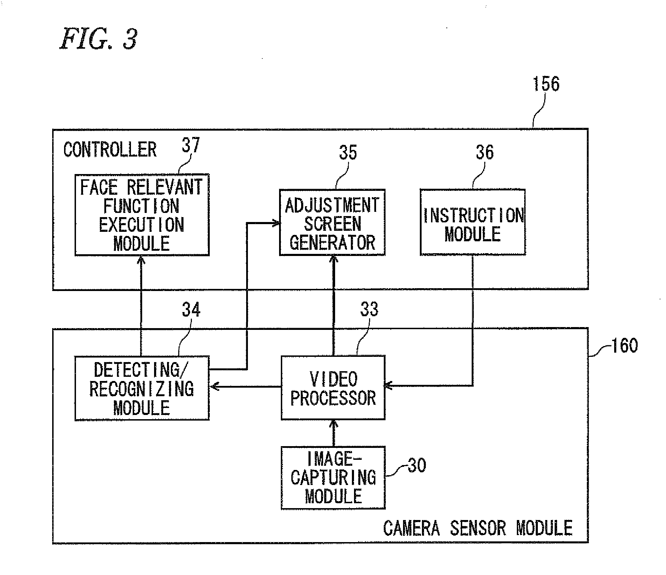

The DTV 1 has a controller 156 which controls operations of respective portions of the DTV 1. The controller 156 has a built-in central processing unit (CPU), etc. The controller 156 starts up a system control program and various kinds of processing programs stored in a read only memory (ROM) 157 in advance in accordance with an operation signal inputted from an operating module 116 or an operation signal transmitted from a remote controller 117 and received through an optical receiver 118. The controller 156 controls operations of respective portions of the DTV 1 by using a random access memory (RAM) 158 as a work memory in accordance with the started-up programs. The controller 156 has processors for executing various kinds of functions. The processors will be described later with reference to Fig. 3.

An input terminal 144 feeds a satellite digital television broadcast signal received by a BS/CS digital broadcast receiving antenna 143 to a satellite digital broadcast tuner 145. The tuner 145 tunes the received digital broadcast signal, and transmits the tuned digital broadcast signal to a phase shift keying (PSK) demodulator 146. The PSK demodulator 146 demodulates a transport stream (TS) and feeds the demodulated TS to a TS decoder 147a. The TS decoder 147a decodes the TS into a digital signal including a digital video signal, a digital audio signal and a data signal, and then outputs the digital signal to a signal processor 100. The digital video signal is a digital signal concerned with video which can be outputted by the DTV 1. The digital audio signal is a digital signal concerned with audio which can be outputted by the DTV 1. The data signal is a digital signal concerned with information about broadcast programs of broadcast wave, for example, inclusive of program relevant information etc. which is information used when the DTV 1 generates an electronic program guide (EPG) which is an electronic program table.

An input terminal 149 feeds a terrestrial digital television broadcast signal received by a terrestrial digital broadcast receiving antenna 148 to each terrestrial digital broadcast tuner 150. The tuner 150 tunes the received digital broadcast signal and sends the tuned digital broadcast signal to a corresponding orthogonal frequency division multiplexing (OFDM) demodulator 151. The OFDM demodulator 151 demodulates a TS and feeds the demodulated TS to a corresponding TS decoder 147b. The TS decoder 147b decodes the TS into digital video and audio signals etc. and then outputs these digital video and audio signals etc. to the signal processor 100. As an example, the antenna 148 connected to the input terminal 149 in the DTV 1 may be replaced by a common antenna television (CATV) tuner so that CATV can be viewed.

The signal processor 100 applies appropriate signal processing to the digital signal outputted from the TS demodulator 147a or 147b or the controller 156. More specifically, the signal processor 100 demultiplexes the digital signal into a digital video signal, a digital audio signal and a data signal. The demultiplexed video signal is outputted to a graphics processor 152 while the audio signal is outputted to an audio processor 153. The signal processor 100 further applies certain digital signal processing to a signal inputted from a line input terminal 137.

An on screen display (OSD) signal generator 154 generates an OSD signal for displaying a user interface (UI) screen, etc. in accordance with the control of the controller 156. The data signal demultiplexed from the digital broadcast signal in the signal processor 100 is converted into an OSD signal with an appropriate format by the OSD signal generator 154 and outputted to the graphics processor 152.

The graphics processor 152 applies a decoding process to the digital video signal outputted from the signal processor 100. The thus decoded video signal is superposed on and combined with the OSD signal outputted from the OSD signal generator 154, so that the resulting signal is outputted to a video processor 155. In addition, the graphics processor 152 can output either of the decoded video signal and the OSD signal to the video processor 155 selectively.

The video processor 155 applies image quality correction to the signal outputted from the graphics processor 152, and then converts the resulting signal into a video signal with a format displayable on the display module 120. The video signal converted by the video processor 155 is displayed on the display module 120. Image quality correction in the video processor 155 will be described in detail with reference to Fig. 3, etc.

The display module 120 includes a liquid crystal display (LCD) which displays video by using liquid crystal. A backlight 121 irradiates the display module 120 from the back.

The audio processor 153 converts the input audio signal into an audio signal with a format reproducible on speaker 110. The audio signal obtained by the conversion is outputted to the speaker 110 and reproduced by the speaker 110.

An LAN terminal 131 is connected to the controller 156 through an LAN I/F 164. The LAN terminal 131 is used as a general LAN port using Ethernet (registered trademark). According to the embodiment, an LAN cable is connected to the LAN terminal 131 so that the DTV 1 can communicate with Internet 3.

A camera sensor module 160 is provided on a lower side of the display module 120 so that the camera sensor module 160 can capture an image in front of the camera sensor module 160. The camera sensor module 160 can detect a user's face from the captured image and further can collate the detected user's face information with registered user's face information to thereby determine whether the detected user is a registered user or not. When a user's face is present (detected) in the image captured by the camera sensor module 160, that is, generally when a user is viewing the DTV 1, the DTV 1 can execute various kinds of processing based on that fact. When the detected user's face coincides with a registered user's face, the DTV 1 can execute a function or setting individually in accordance with the user. The camera sensor module 160 has a function of notifying the controller 156 of information indicating detection of a user's face when the user's face is detected from the captured image, and notifying the controller 156 of identification information indicating a user when the registered user's face is recognized. With respect to the face detection method, for example, a user's face may be detected based on the contour of the user's face or shoulder or may be recognized by another different method. With respect to the face recognition technical method mentioned herein, for example, a user may be recognized (identified) based on the recognized shape of user's eyes, nose, mouth or the like or may be recognized based on another different feature volume.

A universal serial bus (USB) terminal 133 is connected to the controller 156 through a USB I/F 166. The USB terminal 133 is used as a general USB support port. For example, a cellular phone, a digital camera, a card reader/writer for various kinds of memory cards, an HDD, a keyboard, etc. are connected to the USB terminal 133 through a hub. The controller 156 can perform communication (transmission/reception) for information with (to/from) each device connected through the USB terminal 133.

An HDD 170 is a magnetic recording medium which is built in the DTV 1 and which has a function of storing various kinds of information of the DTV 1.

The DTV 1 in this embodiment has a function of detecting/recognizing a user's face based on an image captured by the image-capturing module and executing various kinds of processing based on the user's face. This function will be described below in detail.

Fig. 3 is a block diagram showing an example of configuration concerned with the face detecting/recognizing function of the DTV 1 according to the embodiment.

The camera sensor module 160 and the controller 156 have configuration concerned with the face detecting/recognizing function. The functional configuration of the camera sensor module 160 will be described first here.

The image-capturing module 30 is an image-capturing means such as a camera which has a function of capturing an image in front of the display module 120. The image-capturing module 30 inputs the captured image to a video processor 33.

A detecting/recognizing module 34 has a function of detecting/recognizing a user's face from video outputted from the video processor 33. With respect to the detecting/recognizing method mentioned herein, as described above, various kinds of feature volume are extracted from the video to thereby detect/recognize the face. The detecting/recognizing module 34 has a register for storing information of feature volume of a face. The detecting/recognizing module 34 collates the extracted feature volume with the registered feature volume to thereby determine whether there is a face in the input video or not (face detection) and whether the detected face corresponds to (coincides with) the registered user face or not (face recognition). When a face is detected from the input video, the detecting/recognizing module 34 notifies a face relevant function execution module 37 and an adjustment screen generator 35 in the controller 156, of the detection of the face and information of the position of the face in the video. When the detected face feature volume corresponds to (coincides with) the registered face feature volume, the detecting/recognizing module 34 notifies the face relevant function execution module 37 of an identifier indicating the user.

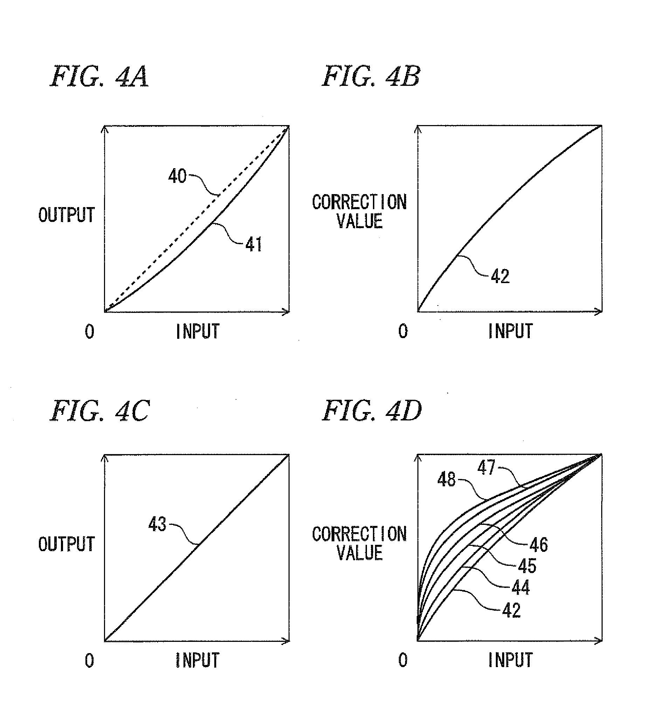

The video processor 33 has a function of executing certain video processing on video inputted from the image-capturing module 30. Generally, the captured video inputted from the image-capturing module 30 is video affected by characteristic of a camera lens, etc. of the image-capturing module 30. For application of the video to various kinds of functions, it is preferable that the influence of characteristic of the camera lens, etc. is reduced. In the embodiment, a correction process called gamma correction for adjusting a luminance gain is executed on the video captured by the image-capturing module 30. That is, the video processor 33 adjusts the luminance of the video inputted from the image-capturing module 30 and outputs the adjusted video to the detecting/recognizing module 34. The certain video processing executed on the video inputted from the image-capturing module 30 by the video processor 33 will be described later in detail with reference to Figs. 4A to 4D.

As for the detecting/recognizing process, the detecting/recognizing module 34 may hardly detect/recognize a target because of an image-capturing environment around the DTV 1 or individuality of the user as the target of detection/recognition. For example, there is a possibility that it will be difficult to detect/recognize a target from captured video when the user as the target is in a poorly illuminated environment. When the user is dark-complexioned in such an environment, it will be more difficult to detect/recognize the user's face. When the user's face cannot be detected/recognized, various kinds of functions based on the face detection/recognition cannot be used so that sufficient service cannot be provided to the user. As described above, when it is difficult to detect/recognize a target because of the image-capturing environment around the DTV 1 or individuality of the user as the target of detection/recognition, the video processor 33 executes certain video processing on the video inputted from the image-capturing module 30 to make it easy to detect/recognize the user's face in the video, and then outputs the processed video to the detecting/recognizing module 34. This processing permits the detecting/recognizing module 34 to improve the face detection/recognition rate in the video.

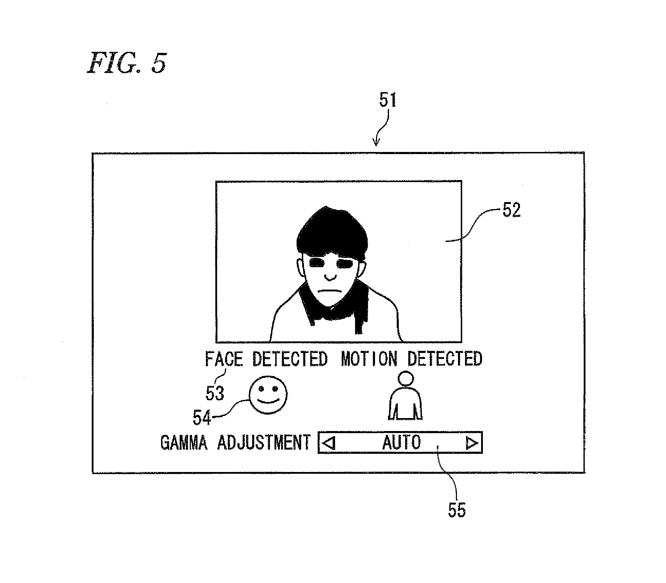

The adjustment screen generator 35 has a function of generating a screen for accepting an operating instruction from the user with respect to adjustment of video processing throughput of video as a subject subjected to face detection/recognition by the detecting/recognizing module 34, and providing the screen to the user. The adjustment screen generator 35 generates an adjustment screen based on signals inputted from the video processor 33 and the detecting/recognizing module 34. Fig. 5 shows an example of the adjustment screen. Detailed description of the adjustment screen will be made later as description with reference to Fig. 5.

An instruction module 36 has a function of instructing the video processor 33 to adjust video processing throughput, for example, based on a user's instruction inputted through the remote controller 117.

The face relevant function execution module 37 has a function of executing various kinds of functions based on a result of detection/recognition when a user's face can be detected/recognized from video captured by the image-capturing module 30.

For example, the various kinds of functions based on a result of face detection include an automatic powering on/off function for the DTV 1, and a backlight luminance adjusting function for the display module 120. The automatic powering ON/OFF function means a function of powering off the DTV 1 automatically when the user's face is not detected, and powering on the DTV 1 automatically when the user's face is detected. The backlight luminance adjusting function means a function of reducing luminance of the backlight automatically to attain energy saving when the user's face is not detected.

For example, the various kinds of functions based on a result of face recognition include a personal image quality/audio quality setting function, a parental locking function, a user's preference EPG providing function, a favorite channel function, a recorded contents individual management function, etc. The personal image quality/audio quality setting function means a function of setting registered user's personal preference image quality/audio quality in advance so that video/audio can be outputted with image quality/audio quality corresponding to the recognized user. The parental locking function means a function of locking viewing of certain programs based on user's personal registration. The user's preference EPG providing function means a function of displaying an EPG, for example, customized by each registered user. The favorite channel function means a function of recommending registered user's favorite channels to the user. The recorded contents individual management function means a function of managing recorded contents according to each registered user.

Video processing executed by the video processor 33 will be described below in detail with reference to Figs. 4A to 4D.

Figs. 4A to 4D are graphs for explaining video processing executed on video as a subject of a face detection/recognition process by the video processor 33 according to the embodiment.

As described above, video captured by the image-capturing module 30 is generally affected by characteristic of a camera lens, etc. The video processor 33 generally executes a gamma correction process to reduce the influence of the characteristic.

When the video (luminance of output video) captured by the image-capturing module 30 is affected by characteristic of a camera lens, etc., the video does not exhibit an ideal luminance value as represented by a straight line 40 in Fig. 4A but exhibits a deviated luminance value from the ideal luminance value as represented by a curve 41 in Fig. 4A in comparison with an actual image (luminance of video inputted to the camera lens).

In this correction, the luminance value of the captured video is multiplied by a gamma correction table to form an inverse function of camera lens characteristic as represented by a curve 42 in Fig. 4B. Consequently, the video comes near to the ideal luminance value as represented by a straight line 43 in Fig. 4C.

The video processor 33 in the embodiment has not only one gamma correction table for reducing characteristic but also a larger number of gamma correction tables. These gamma correction tables are shown in Fig. 4D.

Fig. 4D is a graph showing gamma correction tables used for gamma correction of video. A plurality of curves 42 and 44 to 48 shown in Fig. 4D represent gamma correction tables respectively. The curves 44 to 48 do not represent gamma correction tables used for gamma correction to reduce characteristic of the camera lens, etc. but represent gamma correction tables used for luminance processing so that the detecting/recognizing module 34 can detect/recognize a face in the video easily.

That is, when video is dark due to poor illumination, etc., shadowing of a part of the video may occur. Therefore, gamma correction tables different from the gamma correction table corresponding to characteristic of the image-capturing module 30 are prepared to increase luminance of video. In the curves 44 to 48, the curve 44 represents a gamma correction table in which the difference between the luminance of the input video signal and the luminance of the output luminance signal becomes the smallest (the pace of luminance increase is the lowest), and the curve 48 represents a gamma correction table in which the difference between the luminance of the input video signal and the luminance of the output luminance signal becomes the largest (the pace of luminance increase is the highest).

In the embodiment, gamma correction tables of the curves 44 to 48 are prepared as face detection/recognition gamma correction tables for a five-stage gamma correction process. The video processor 33 executes video processing on input video to increase luminance of the video signal (make the video bright) by using these gamma correction tables, and outputs a result of the video processing to the detecting/recognizing module 34. As the luminance value inputted to the curves 44 to 48 in this embodiment becomes smaller, the correction value to be multiplied by the luminance is set to be larger. That is, as a place in the video becomes darker, luminance in the place changes more largely to brighten pixels.

In the embodiment, a luminance adjusting process (gamma correction process) is executed to increase luminance of video as shown in Figs. 4A to 4D. Consequently, video is brightened. Accordingly, even when the captured video is dark as described above, the place of shadowing in the video is reduced so that the detecting/recognizing module 34 can detect/recognize the contour, eyes, nose, mouth, etc. of the user easily.

The luminance adjustment (gamma correction) process may be performed automatically by the DTV 1 or may be performed based on a user's instruction. In addition, these may be combined with each other. In the embodiment, the user can change over one of automatic adjustment and adjustment based on user's inputting to the other. In addition, the user can select the degree of gamma correction. For the selection, an adjustment screen which is a screen for adjustment of gamma correction is provided to the user. The adjustment screen will be described below.

Fig. 5 is a conceptual view showing an example of the adjustment screen according to the embodiment.

The adjustment screen 51 is a screen which is provided to the user so that the user can change the gamma correction setting to one of automatic setting and manual setting or can change the degree of gamma correction in the manual setting. The adjustment screen 51 is also a screen which is generated by the adjustment screen generator 35 and displayed on the display module 120. The user can know whether the user's face is currently detected or not, from the adjustment screen 51.

The adjustment screen 51 has a part provided as a target video indication 52. The target video indication 52 is an indication of video as a subject of face detection/recognition. The video is obtained by pasting video inputted from the video processor 33 as it is. That is, when a gamma correction process is applied to video as a subject of detection/recognition, video after the gamma correction process is displayed. Accordingly, an image currently captured by the image-capturing module 30 can be recognized, so that the user can confirm that an image of the user is captured by the image-capturing module 30. For example, when a function based on face detection/recognition does not start though the user is in front of the DTV 1, it is general that the user can hardly find the reason why the function based on face detection/recognition does not start. This is because the user does not know where a problem is, in terms of the face detection/recognition function. That is, the user cannot know whether the problem occurred because the image-capturing module 30 is broken down or because the user's face cannot be detected/recognized. In the DTV 1 in the embodiment, however, the user can instruct the DTV 1 to display the adjustment screen 51. Because the target video indication 52 is contained in the adjustment screen 51, the user can know whether the image of the user is captured correctly or not.

On the adjustment screen 51, a "face detected" notice indication 53 can be displayed. The "face detected" notice indication 53 is displayed with a dark color while the detecting/recognizing module 34 has not detected the user's face from video yet. The "face detected" notice indication 53 is displayed with a bright color when the detecting/recognizing module 34 detects the user's face from the video. In the embodiment, the "face detected" notice indication 53 is an indication showing notice of "face detected".

On the adjustment screen 51, a "face detected" notice icon 54 is further displayed. The "face detected" notice icon 54 has a function of indicating notice of "face detected" to the user. In the embodiment, when the user's face is detected, facial expression of the "face detected" notice icon 54 changes to thereby send notice of "face detected" to the user. For example, the facial expression may change as follows. That is, the "face detected" notice icon 54 is an expressionless face when the user's face has not been detected yet, and the "face detected" notice icon 54 changes into a smiling face when the user's face is detected. The notice of "face detected" may be made not based on the facial expression change but based on color change, transparency change, etc. The notice of "face detected" need not be made in the "face detected" notice indication 53 and the "face detected" notice icon 54. For example, when the user's face is detected, the adjustment screen generator 35 may display the cursor on the user's face based on position information of the user's face on the video, the user's face being inputted from the detecting/recognizing module 34.

On the adjustment screen 51, an adjustment indication 55 is displayed so that the user can issue an instruction concerned with gamma correction. The adjustment indication 55 can urge the user to select whether gamma correction is performed by the DTV 1 automatically or whether gamma correction is performed based on a user's instruction. The user can change over one of auto/manual adjustments to the other and adjust the amount of gamma correction by focusing on the adjustment indication 55 by means of the remote controller 117 or the like and pushing a side button of the remote controller 117. Whenever the side button is pushed after focusing, an indication "AUTO" and indications "1", "2", "3", "4" and "5" are switched in a toggle manner and displayed in the adjustment indication 55. The side button is not necessarily used for the switching. For example, a certain button may be allocated to the remote controller 17 so that the switching can be made in a toggle manner when the button is pushed down.

When the user selects "AUTO" here, the DTV 1 performs gamma correction automatically without user's designation of the degree of gamma correction. On this occasion, the video processor 33 changes the gamma correction table automatically, so that the detecting/recognizing module 34 executes a face detection/recognition process.

Other options than "AUTO" are provided so that the user can change the degree of gamma correction manually. The degree of gamma correction increases in numerical ascending order. That is, when "1" is selected, the video processor 33 performs a gamma correction process by using the curve 44 as a gamma correction table. When "5" is selected, the video processor 33 performs a gamma correction process by using the curve 48 as a gamma correction table.

When there is an operation instruction received from the remote controller 117, the instruction module 36 instructs the video processor 33 to perform a gamma correction process.

A flow of processing will be described below.

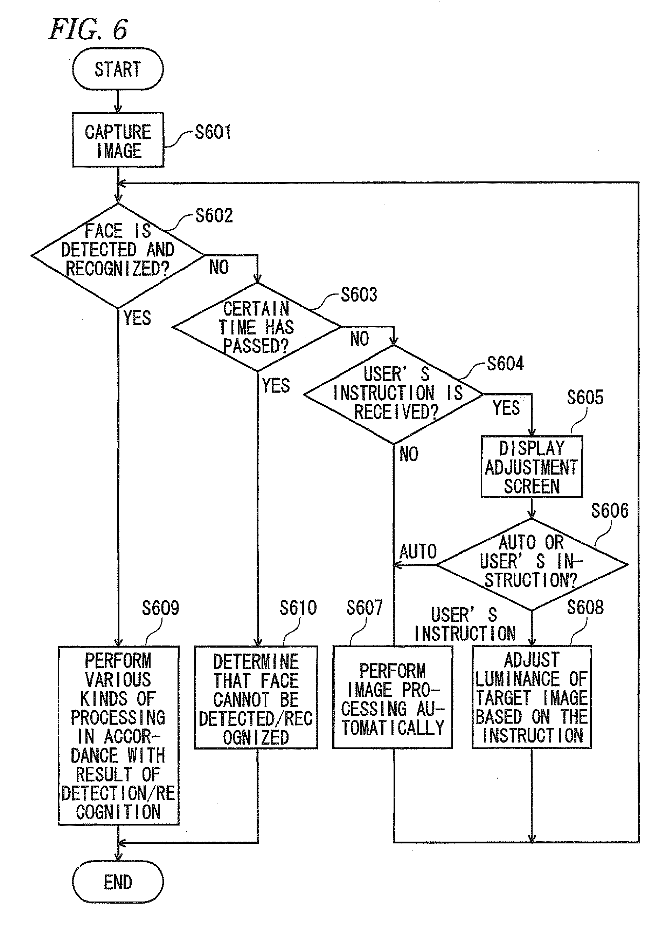

Fig. 6 is a flow chart showing an example of processing concerned with face detection/recognition according to the embodiment.

First, the image-capturing module 30 captures an image in front of the DTV 1 (step S601).

Then, the detecting/recognizing module 34 determines whether the user's face is detected/recognized from the input video or not (step S602).

When the detecting/recognizing module 34 does not detect/recognize the user's face from the input video in the step S602 (No at step S602), the controller 156 determines whether a certain time has passed or not since start of image-capturing by the image-capturing module 30 (step S603).

While the certain time has not passed (No at step S603), the controller 156 determines whether a user's instruction to display the adjustment screen 51 is received or not (step S604).

When the controller 156 receives the user's instruction to display the adjustment screen 51 (Yes at step S604), the adjustment screen generator 35 generates the adjustment screen 51 and displays the adjustment screen 51 on the display module 120 (step S605).

When the adjustment screen 51 is displayed, the controller 156 determines whether "AUTO" is selected by the user or one of "1", "2", "3", "4" and "5" is selected by the user for gamma correction (a user's instruction is selected) (step S606).

When the controller 156 does not receive the user's instruction to display the adjustment screen 51 (No at step S604) or when "AUTO" is selected by the user ("AUTO" at step S606), the video processor 33 changes the gamma correction table automatically and executes a gamma correction process (step S607).

On the other hand, when one of "1", "2", "3", "4" and "5" (user's instruction option) is selected by the user in the step S606 ("USER'S INSTRUCTION" at step S606), the video processor 33 changes the gamma correction table based on the instruction and executes a gamma correction process (step S608).

In this embodiment, in the case where "AUTO" is selected in the adjustment indication 55, gamma correction is executed by use of a gamma correction table with a smaller gamma value compared with the case where one of the user's instruction options "1" to "5" is selected. However, the embodiment is not limited thereto.

When the detecting/recognizing module 34 detects/recognizes the user's face from the input video in the step S602 (Yes at step S602), the detecting/recognizing module 34 sends the notice and/or a recognized user identifier to the face relevant function execution module 37 so that the face relevant function execution module 37 executes various kinds of face relevant functions (step S609).

When the determination in the step S603 concludes that the certain time has passed since start of image-capturing by the image-capturing module 30 (Yes at step S603), the controller 156 determines that it is impossible to detect/recognize the user's face from video as a subject of detection/recognition (step S610).

After completion of the step S609 or S610, the aforementioned processing flow is terminated.

The DTV 1 in the embodiment can improve the face detection/recognition rate by adjusting luminance of video as a subject of face detection/recognition.

Although description has been made in the case where face detection/recognition is executed as parallel processing, the aforementioned video processing may be applied to only face detection. The part as a target of detection/recognition need not be a face but may be another human part such as a hand, a shoulder, etc. or the target of detection/recognition need not be a human being.

Although the embodiment has been described in the case where luminance of video is adjusted to brighten a dark place to thereby improve the detection/recognition rate, the embodiment is not limited thereto. For example, detection/recognition may be performed after luminance is adjusted to darken a bright place. For example, such processing is regarded as effective when the surrounding is so bright that captured video becomes whiteout. Although description has been made above in the case where luminance of video is adjusted by gamma correction to improve the detection/recognition rate, the video adjusting process for improving the detection/recognition rate is not limited thereto. For example, other values such as RGB may be adjusted to improve the detection/recognition rate.

When there are plural users in captured video, it may be conceived that some of the users are detected/recognized but the other users are not detected because of individualities of the users. In the embodiment, because video processing for detection/recognition can be executed by a user's operation, detection/recognition of users which cannot be detected/recognized can be executed in this case. On this occasion, results of detection/recognition concerned with users who have been already detected/recognized before video processing may be held so that results of detection/recognition concerned with users who are detected/recognized newly after video processing can be added to the held results. That is, this configuration permits the DTV 1 to manage users who can be detected/recognized from respective videos before and after video processing as results of detection/recognition simultaneously even when users who have been already detected/recognized before video processing cannot be detected/recognized due to the video processing.

While certain embodiment has been described, the exemplary embodiment has been presented by way of example only, and is not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An electronic apparatus comprising:
an image-capturing module;
a detector configured to detect a certain object from video captured by the image-capturing module;
a function execution module configured to execute a certain function based on a detection result of the detector; and
a video processor configured to execute video processing on the video on which a detection process is executed by the detector so that the detector easily detects the certain object to be a detection target.

2. The apparatus of Claim 1, wherein the video processor is configured to adjust luminance of the video as the video processing to be executed.

3. The apparatus of Claim 2, wherein the video processor is configured to adjust luminance to brighten a dark portion of the video.

4. The apparatus of one of Claims 1 to 3, wherein the video processor is configured to execute gamma correction of the video as the video processing to be executed.

5. The apparatus of Claim 4, wherein the video processor is configured to execute the gamma correction by changing gamma correction tables from one to another.

6. The apparatus of Claim 5, wherein the video processor is configured to change the gamma correction table based on a user's operation input.

7. The apparatus of Claim 5 or 6, wherein the video processor is configured to automatically change the gamma correction table.

8. The apparatus of one of Claims 1 to 7 further comprising:
a generator configured to generate a selection screen provided to a user for performing, by the user, a selection concerned with execution of the video processing.

9. The apparatus of Claim 8, wherein when the object is detected by the detector, the generator is configured to display, in the selection screen, a notice that the object is detected.

10. The apparatus of one of Claims 1 to 9, wherein the object to be detected by the detector is a user's face.

11. A video processing method comprising:
detecting a certain object from video captured by an image-capturing module mounted in an electronic apparatus;
executing a certain function based on a detection of the object when the object is detected; and
executing video processing on the video of a detection target so that the certain object to be the detection target is detected easily.
